**Europäisches Patentamt**

**European Patent Office**

**Office européen des brevets**

(19)

(11) Veröffentlichungsnummer : **0 052 877**
**B1**

(12) **EUROPÄISCHE PATENTSCHRIFT**

(45) Veröffentlichungstag der Patentschrift :
**25.07.84**

(51) Int. Cl.³ : **B 60 T 15/08**

(21) Anmeldenummer : **81109819.3**

(22) Anmeldetag : **21.11.81**

(54) Zweikreis-Druckgeber für eine druckmittelbetätigbare Zweikreis-Bremsanlage für Fahrzeuge.

(30) Priorität : **25.11.80 DE 3044230**

(43) Veröffentlichungstag der Anmeldung :
**02.06.82 Patentblatt 82/22**

(45) Bekanntmachung des Hinweises auf die Patenterteilung : **25.07.84 Patentblatt 84/30**

(84) Benannte Vertragsstaaten :
**FR GB IT**

(56) Entgegenhaltungen :
**DE-A- 2 248 923**
**DE-A- 2 820 142**
**DE-A- 2 825 559**
**DE-A- 2 914 232**
**DE-B- 2 820 107**
**DE-C- 2 548 973**

(73) Patentinhaber : **Graubremse GmbH**
**Eppelheimer Strasse 76**
**D-6900 Heidelberg (DE)**

(72) Erfinder : **Grüner, Hans**
**Heidelberger Strasse 53**
**D-6803 Edingen-Neckarhausen (DE)**

(74) Vertreter : **Patentanwälte Dipl.-Ing. Rudolf Bibrach**
**Dipl.-Ing. Elmar Rehberg**
**Pütterweg 6 Postfach 738**
**D-3400 Göttingen (DE)**

**Beschreibung**

Die Erfindung bezieht sich auf einen Zweikreis-Druckgeber für eine druckmittelbetätigbare Zweikreis-Bremsanlage für Fahrzeuge, insbesondere Kraftfahrzeuge, der im Oberbegriff des Anspruches 1 angegebenen Art, wie sie aus der DE-PS 25 48 973 bekannt ist.

Bereits die DE-OS 22 48 923 zeigt grundlegend eine Zweikreis-Bremsanlage mit lastabhängiger Vorderachsmitregelung. Hierzu wird in der Anlage neben einem üblichen Zweikreis-Druckgeber ein gesondertes, mit dem Zweikreis-Druckgeber durch Leitungen verbundenes Steuerventil eingesetzt, welches einen Differentialkolben, also ein konstantes Übersetzungsverhältnis aufweist. Die eine der beiden anströmseitig vorgesehenen Teilwirkflächen des Differentialkolbens wird vom ausgesteuerten Druck des Bremskraftreglers derart beaufschlagt, daß das Übersetzungsverhältnis gleichsinnig zum Regeldruck im Hinterachsbremskreis veränderbar ist.

Die Integration dieses Steuerventiles in den Zweikreis-Druckgeber führt zur DE-PS 25 48 973, indem der im dortigen Zweikreis-Druckgeber ohnehin vorhandene zweite Kolben als Stufenkolben ausgebildet wird und steuerdruckseitig mit zwei Wirkflächen versehen wird, von denen die eine vom ausgesteuerten Druck des ersten Bremskreises und die andere vom ausgesteuerten lastabhängig geregelten Bremsdruck des Hinterachsbremskreises beaufschlagt wird. Damit ist der Nachteil verbunden, daß das Ansprechverhalten für die Aussteuerung des der Vorderachse zugeordneten Bremsdruckes weitgehend fixiert ist : An dem zweiten Kolben findet diesbezüglich — also bevor der lastabhängige Bremsdruckregler Druck aussteuert — immer eine Untersetzung statt, die, wenn die ausströmseitige Teilwirkfläche am Stufenkolben relativ klein gewählt wird, zu einem besonders späten Ansprechen führt ; auch ist der lastabhängig geregelte Einfluß in dem dem Ansprechvorgang nachfolgenden Bremsbereich dann entsprechend groß. Wird dagegen diese anströmseitige Teilwirkfläche für den vom ersten Bremskreis ausgesteuerten Druck relativ größer gewählt, dann wird zwar die Untersetzung verbessert, aber auch notwendigerweise der Einfluß des geregelten Bremsdruckes auf die Vorderachse verkleinert. Ein ähnlicher Mehrkreis-Druckgeber ist auch aus der DE-OS 28 20 142 bekannt.

Die DE-AS 28 20 107 zeigt die Weiterbildung derartiger Zweikreis-Druckgeber, die als zweiten Kolben einen Stufenkolben mit zwei anströmseitig vorgesehenen Wirkflächen verwenden. In der Zuleitung zu der weiteren Wirkfläche oder bei Anordnung einer dritten Wirkfläche ist dort am Mehrstufenkolben in der Zuleitung zu der betreffenden Wirkfläche ein Überströmventil mit Rückströmung eingeschaltet. Dies bewirkt eine Knickregelung der Vorderachse.

Der Erfindung liegt die Aufgabe zugrunde, an einem Zweikreis-Druckgeber der eingangs beschriebenen Art das Ansprechverhalten der Radbremsen des Vorderachsbremskreises zu verbessern. Dabei kann es auch darum gehen, die Wirkfläche des zweiten Kolbens, die vom ausgesteuerten Druck der ersten Druckkammer beaufschlagt wird, bei konstanten Außenabmessungen des Gerätes möglichst groß zu machen. In diesem Fall soll also eine Druckuntersetzung am zweiten Kolben vermieden werden.

Erfindungsgemäß wird dies dadurch erreicht, daß in dem Strömungsmittelweg zwischen der ersten Druckkammer und der Steuerkammer, an die der zweite Kolben mit seiner Gesamtwirkfläche angrenzt, ein Drucksteuerventil vorgesehen ist, daß einen als selbständig bewegbares Teil ausgebildeten Kolben mit einer angrenzend an eine Steuerkammer angeordneten Wirkfläche für die Beaufschlagung durch den vom lastabhängig arbeitenden Bremsdruckregler ausgesteuerten Druck aufweist. Das Drucksteuerventil kann als Druckbegrenzer oder als Druckminderer ausgebildet sein. Es ist nicht mehr erforderlich, daß der zweite Kolben zusätzlich zu der vom Druck der ersten Druckkammer beaufschlagten Fläche eine weitere Teilwirkfläche aufweist. Damit wird der zweite Kolben unabhängig von einer zwangsweisen Untersetzung. Er wird vielmehr bei geöffnetem Drucksteuerventil und bei der Einleitung eines Bremsvorganges auf seiner Gesamtwirkfläche vom ausgesteuerten Druck aus der ersten Druckkammer beaufschlagt, wodurch das Ansprechverhalten verbessert wird. Von besonderem Vorteil ist diese Durchsteuerung durch das Drucksteuerventil bei Fahrzeugen mit hydraulischer Radbremse, bei der alle weiteren Anlagenteile mit Ansprechstufen beaufschlagt werden. Durch die Ausbildung des zweiten Kolbens als ganz normaler Einfachkolben wird ein Ansprechverhalten erreicht, welches dem Ansprechverhalten üblicher Zweikreis-Druckgeber — also ohne lastabhängige Mitregelung der Vorderachse — entspricht. Mit dem Drucksteuerventil in dem Zweikreis-Druckgeber ist der Vorteil verbunden, daß die achslastabhängige Mitregelung der Vorderachse nunmehr zu keiner Verschlechterung des Ansprechverhaltens führt. Durch die Ausbildung des zweiten Kolbens als ganz normaler Einfachkolben und die Vorschaltung des Drucksteuerventils wird es möglich, des Kolben des Drucksteuerventils von der einen oder anderen Seite her mit der Kraft einer Feder zu beaufschlagen, die nicht das Auslaßventil der Baugruppe des zweiten Kreises belastet.

Besonders vorteilhaft ist es, wenn das Drucksteuerventil koaxial zu den beiden Kolben und zwischen diesen vorgesehen ist, so daß hier die Integration eines Drucksteuerventils in einen Zweikreis-Druckgeber am weitesten vorangetrieben ist und dabei minimaler Herstellungsaufwand entsteht.

Das Drucksteuerventil kann einen Stufenkolben mit einem eingezogenen Rand und auf einem Fortsatz des zweiten Kolbens einen dichtend verschiebbar gelagerten Ventilkörper aufweisen. Dabei ist es möglich, daß der Stufenkolben den gleichen Außendurchmesser aufweist, wie es dem zweiten Kolben des Vorderachsbremskreises entspricht, so daß ein einziger gehäuseseitig vorgesehener Zylinder Anwendung finden kann. Wesentlich ist dabei wieder, daß der Stufenkolben und der zweite Kolben durch einen gehäuseseitigen Anschlag voneinander getrennt sind bzw. sich auf einem solchen Anschlag abstützen, so daß Kräfte zwischen diesen beiden Kolben nur über den Druck übertragen werden können. Demzufolge wirkt sich eine Federbelastung des Stufenkolbens auch nicht auf den Kolben bzw. das Relaisventil des zweiten Kreises aus.

Es ist aber auch möglich, daß das Drucksteuerventil am Gehäuse des Zweikreis-Druckgebers angeflanscht angeordnet ist. Durch diese Möglichkeit können normale Zweikreis-Druckgeber mit zwei Einfachkolben leicht umgerüstet werden. Das Drucksteuerventil weist in diesem Falle einen hohlen Steuerkolben auf, in dem ein gesteuertes Rückschlagventil gelagert ist. Der Steuerkolben ist auch hier entgegen seiner Betätigungsrichtung vom ausgesteuerten Druck der ersten Druckkammer und entgegengesetzt von dem vom Bremsdruckregler ausgesteuerten geregelten Bremsdruck beaufschlagt.

Der Stufenkolben bzw. der Steuerkolben können in Betätigungsrichtung oder entgegengesetzt dazu von einer insbesondere in ihrer Kraft einstellbaren Feder belastet sein. Wird die Feder in Betätigungsrichtung wirkend angeordnet, so bewirkt dies eine Kennlinienerhöhung im Teilbremsbereich. Wird die Feder entgegengesetzt zur Betätigungsrichtung angeordnet, dann bewirkt dies eine Kennlinienerniedrigung im Teilbremsbereich, wie sie beispielsweise bei einer mechanisch betätigten Radbremse, also bei direkter Beaufschlagung der Bremszylinder, erwünscht sein kann.

Die Erfindung wird an einigen Ausführungsbeispielen weiter verdeutlicht. Es zeigen :

Figur 1 einen Schnitt durch den Zweikreis-Druckgeber in einer ersten Ausführungsform,

Figur 2 einen Teilausschnitt des Zweikreis-Druckgebers in einer abgewandelten Ausführungsform gegenüber Fig. 1,

Figur 3 einen Schnitt durch einen Zweikreis-Druckgeber in einer dritten Ausführungsform und

Figur 4 ein Druckdiagramm des zur Vorderachse ausgesteuerten Druckes über dem Hub des Zweikreis-Druckgebers.

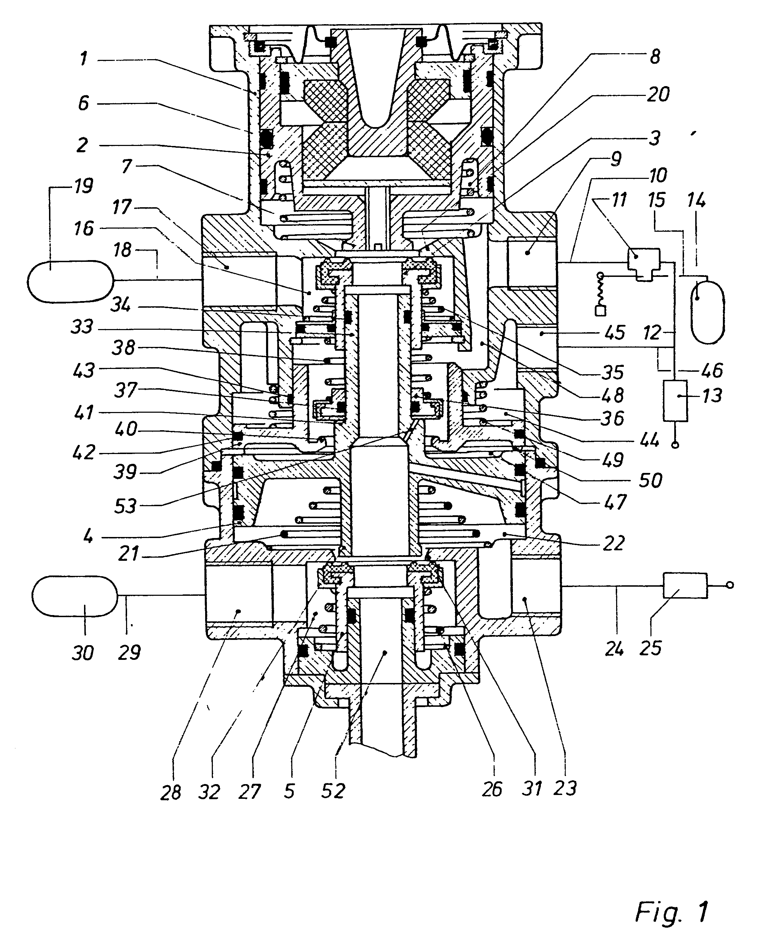

Das Gehäuse 1 des in Fig. 1 dargestellten Zweikreis-Druckgebers ist zweckmäßig mehrteilig ausgebildet und nimmt in seinem oberen Teil einen ersten Kolben 2 und einen zugehörigen Doppelventilkörper 3 auf, die dem ersten Bremskreis zugeordnet sind. Im unteren Bereich des Gehäuses 1 ist ein zweiter Kolben 4 vorgesehen, der mit dem zugehörigen Doppelventilkörper 5 zusammenarbeitet und dem zweiten Bremskreis zugeordnet ist. Der erste Bremskreis möge der Hinterachsbremse und der zweite Bremskreis der Vorderachsbremse zugeordnet sein. Der erste Kolben 2 ist über die Dichtung 6 dichtend im Gehäuse 1 gelagert und geführt. Er wird von oben in der üblichen Art und Weise betätigt und besitzt einen Fortsatz 7, der mit dem Doppelventilkörper 3 das Auslaßventil 3, 7 des ersten Bremskreises bildet. Unterhalb des Kolbens 2 ist eine erste Druckkammer 8 vorgesehen, die mit einem Anschluß 9 in dauernder Verbindung steht, die über eine Leitung 10 zu dem lastabhängig geregelten Bremsdruckregler 11 führt. Von dort führt eine Leitung 12 zu den Bremszylindern 13 der Hinterachse. Der Bremsdruckregler 11 wird mit Vorratsdruckluft aus einem Behälter 14 über die Leitung 15 versorgt.

Um den Doppelventilkörper 3 herum ist eine Einlaßkammer 16 gebildet, die über einen Anschluß 17, eine Leitung 18 und einen Druckluftvorratsbehälter 19 des ersten Kreises in dauernder Verbindung steht. Der Doppelventilkörper 3 bildet mit einem eingezogenen Gehäuserand 20 ein Einlaßventil 3, 20 des ersten Bremskreises.

Bezüglich des zweiten Bremskreises ist der zweite Kolben 4 auf einer Feder 21 abgestützt, die gehäuseseitig in einer zweiten Druckkammer 22 vorgesehen ist. Die Druckkammer 22 des zweiten Kreises steht über einen Anschluß 23, einer Leitung 24 mit Bremszylindern 25 der Vorderachse in dauernder Verbindung. Der Doppelventilkörper 5 ist über eine Feder 26 gehäuseseitig abgestützt, wobei abgedichtet eine Einlaßkammer 27 gebildet ist, die über einen Anschluß 28, eine Leitung 29 und einen Druckluftvorratsbehälter 30 mit Druckluft für den zweiten Bremskreis versorgt wird. Der Doppelventilkörper 5 bildet mit einem eingezogenen Gehäuserand 31 das Einlaßventil 5, 31 des zweiten Kreises und mit einem hohlen Fortsatz 32 des zweiten Kolbens 4 das Auslaßventil 5, 32.

Der zweite Kolben 4 besitzt auch nach der anderen Seite einen Fortsatz 33, auf dem vermittels einer Dichtung 34 der Ventilkörper 3 des ersten Kreises dichtend und verschiebbar gelagert ist, der sich im übrigen über eine Feder 35 gehäuseseitig abstützt. Um den Fortsatz 33 herum ist ein Ventilkörper 36 mit Hilfe der Dichtung 37 dichtend und gleitend geführt, der sich über eine Feder 38 gehäuseseitig abstützt. Der Ventilkörper 36 gehört zu einem Stufenkolben 39, der einen eingezogenen Rand 40 aufweist, so daß auf diese Weise ein Drucksteuerventil (36 und 39) gebildet ist. Im übrigen ist an dem Fortsatz 33 ein Bund 41 vorgesehen, gegen den sich der Ventilkörper 36 ansonsten anlegt. Der Stufenkolben besitzt auf seinem Außendurchmesser die Dichtung 42, mit der er im Zylinder des Gehäuses 1 geführt ist. Eine Dichtung 43 teilt eine Steuerkammer 44 ab, die über einen Anschuß 45 und eine Leitung 46 mit der Leitung 12 in Verbindung steht, also vom ausgesteuerten Druck des Bremskraftreglers 11 beaufschlagt wird. Zwischen dem Stufenkolben 39 und dem zweiten Kolben 4 ist eine Steuerkammer 47 gebildet, die über das geöffnete Drucksteuerventil 36 und 39 und einen Kanal 48 mit der ersten Druckkammer 8 bzw. dem ausgesteuerten Druck am Anschluß 9 in Verbindung steht. Der Stufenkolben 39 des Drucksteuerventils 36 und 39 kann in Betätigungsrichtung, also in dem Druckraum 44 von einer Feder 49 belastet sein, die vorzugsweise in ihrer Kraft einstellbar (nicht dargestellt) ausgebildet ist. Die maximale Bewegung des Stufenkolbens 39 ist durch einen Anschlag 50 begrenzt, der gleichzeitig auch als Anschlag für den Kolben 4 des zweiten Kreises dient, so daß der Stufenkolben 39 sich nicht an den zweiten Kolben 4 anlegen kann und diesen daher direkt nicht kraftmäßig beaufschlagen kann. Selbstverständlich findet über den pneumatischen Druck in der Steuerkammer 47 eine gegenseitige kraftmäßige Beaufschlagung statt. Durch die Wahl der Kraft der Feder 49 bzw. der eingestellten Kraft der Feder 49 kann auf die Kennlinie des zum Bremszylinder 25 der Vorderachse ausgesteuerten Druckes Einfluß genommen werden. Die Feder 49 kann beispielsweise so ausgelegt werden, daß bei einer Beaufschlagung der Steuerkammer 47 zunächst der Stufenkolben 39 in Bewegung gesetzt wird, ehe der zweite Kolben 4 das Auslaßventil 32, 5 schließt. Es ist aber auch möglich, die Kraft der Feder 49 größer zu wählen, so daß auf jeden Fall das Durchlaßventil 36, 40 zunächst einmal geöffnet ist, damit der zweite Kolben 4 im Ansprechbereich auf seiner gesamten oberen Wirkfläche vom ausgesteuerten Druck des ersten Kreises beaufschlagt wird, um auf diese Weise ein möglichst frühzeitiges Ansprechen des zweiten Kreises ohne Druckuntersetzung zu erreichen, und zwar bevor der Bremsdruckregler 11 einen lastabhängig geregelten Bremsdruck ausgesteuert hat. Damit wird sichergestellt, daß am zweiten Bremskreis zunächst keine Druckuntersetzung stattfindet und somit der ausgesteuerte Druck gleich dem eingesteuerten Druck ist.

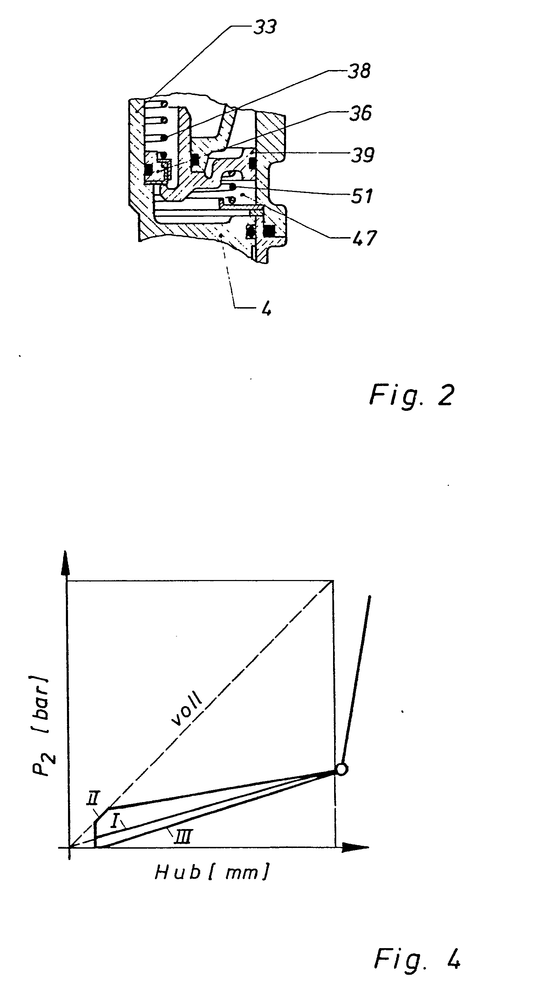

Es ist aber auch möglich, wie Fig. 2 zeigt, eine Feder 51 auf der anderen Seite des Stufenkolbens 39 gehäuseseitig zu lagern, also innerhalb der Steuerkammer 47. Hierdurch wird eine relativ niedrige Bremskraft im Teilbremsbereich für den zweiten Kreis ausgesteuert bzw. eine verzögerte Bremsung ausgesteuert. Durch die Anordnung, die Dimensionierung und ggf. die Einstellung der Feder 49 bzw. 51 ist es möglich, in Verbindung mit dem Drucksteuerventil 36 und 39 das Ansprechverhalten des Vorderachsbremskreises an dem Zweikreis-Druckgeber an das Verhalten der Radbremse der Vorderachse oder einer anderen Fahrzeugachse anzupassen. Dies geschieht mit relativ einfachen Bauteilen, nämlich mit den Federn 49 bzw. 51.

Wie ersichtlich, ist der Doppelventilkörper 3, der Kolben 4 mit seinen Fortsätzen 32 und 33 sowie auch der Doppelventilkörper 5 hohl ausgebildet. Damit wird insgesamt ein Kanal 52 geschaffen, der zur Atmosphäre führt. Der Fortsatz 33 kann unterhalb des Ventilkörpers 36 eine Bohrung 53 besitzen, die zu Entlüftungszwecken der Steuerkammer 47 herangezogen werden kann. Im allgemeinen kann aber auch eine Entlüftung der Steuerkammer 47 über das Auslaßventil 3, 7 des ersten Kreises erfolgen.

Die Funktion der Bremsanlage gemäß Fig. 1 ist folgende : Es ergibt sich bei nichtbetätigtem Zweikreis-Druckgeber eine Relativlage der Teile, wie sie in Fig. 1 dargestellt ist. Die Auslaßventile 3, 7 und 5, 32 sind geöffnet, so daß die Bremszylinder 13 und 25 entlüftet sind. In den Einlaßkammern 16 und 27 steht Vorratsdruckluft an. Beim Betätigen des Zweikreis-Druckgebers wird der Kolben 2 nach unten verschoben, so daß das Auslaßventil 3, 7 geschlossen und das Einlaßventil 3, 20 geöffnet wird. Damit gelangt Druckluft in die Druckkammer 8 und von dort einerseits über den Anschluß 9 in die Leitung 10 zu dem Bremsdruckregler 11 sowie andererseits über den Kanal 48 und das geöffnete Drucksteuerventil 36 und 39 in die Steuerkammer 47. Die Kraft der Feder 49 sorgt dafür, daß sich zunächst der Kolben 4 in Bewegung setzt, bevor der Stufenkolben 39 von dem gemeinsamen Anschlag 50 abhebt. Hierdurch wird das Auslaßventil 5, 32 geschlossen und das Einlaßventil 5, 31 geöffnet, so daß über die zweite Druckkammer 22, den Anschluß 23 und die Leitung 24 der Bremsdruck zu den Bremszylindern 25 der Vorderachse ausgesteuert wird. Zwischenzeitlich hat aber auch der Bremsdruckregler 11 den lastabhängig geregelten Bremsdruck über die Leitung 12 an den Bremszylindern der Hinterachse ausgesteuert. Dieser ausgesteuerte Bremsdruck pflanzt sich in der Leitung 46 fort und gelangt in die Steuerkammer 44, wo er die Kraft der Feder 49 unterstützt. In der Folge wird sich an dem Drucksteuerventil 36 und 39 eine Stellung einstellen, die einer Abschlußstellung nicht unähnlich ist und bei der das Drucksteuerventil 36 und 39 geschlossen ist. Damit wird auch gleichzeitig eine Abschlußstellung am Ventilkörper 5 des zweiten Kreises erreicht. Hierdurch hat sich an den Bremszylindern 25 der Vorderachse ein solcher Bremsdruck eingestellt, der eine lastabhängige Einflußgröße durch den lastabhängig ausgesteuerten Bremsdruck für die Hinterachse zeigt. Wird die Betätigungskraft des Zweikreis-Druckgebers erhöht, dann verschwindet die Abschlußstellung am Doppelventilkörper 3, d. h. das Einlaßventil 3, 20 wird erneut geöffnet, so daß aussteuerseitig der Druck erhöht wird. Dieser erhöhte Druck öffnet auch wieder das Drucksteuerventil 36 und 39 und gelangt somit in die Steuerkammer 47, so daß anteilmäßig auch über eine Öffnung des Einlaßventiles 5, 31 der an der Vorderachse ausgesteuerte Bremsdruck erhöht wird. Auch dabei folgt der vom Bremskraftregler 11 ausgesteuerte Druck über die Wirkfläche in der Steuerkammer 44 und wirkt sich entsprechend aus.

Die zugehörigen Kennlinien sind in Fig. 4 dargestellt. Auf der Ordinate ist der ausgesteuerte Druck des zweiten Kreises, also der Druck in der Druckkammer 22, dargestellt, und zwar über dem Hub des Zweikreis-Druckgebers. Für die Feder 49 gelten — je nach Auslegung — die Linien I und II.

Die Linie I zeigt eine Universalausführung in einem mittleren Durchschnittsbereich. Gemäß der Linie II ist die Kraft der Feder 49 schon etwas größer dimensioniert bzw. eingestellt. Diese Kennlinie eignet sich besonders für eine hydraulische Radbremse, bei der weitere Anlagenteile mit Ansprechstufen beaufschlagt werden.

Wird dagegen die Ausbildung und Anordnung der Feder so getroffen, wie dies anhand der Feder 51 in Fig. 2 gezeigt ist, dann bewirkt dies, daß das Drucksteuerventil 36 und 39 im drucklosen Zustand geschlossen ist und somit im Ansprechverhalten erst geöffnet werden muß. Es entsteht damit die Kennlinie III mit einem etwas verzögerten Ansprechbeginn und einem im Teilbremsbereich abgeflachten Kennlinienverlauf. Eine solche Anpassung eignet sich besonders für eine mechanisch betätigte Radbremse, also bei direkter Beaufschlagung der Bremszylinder. Es versteht sich, daß sämtliche Kennlinien I, II, III am Ende des normalen Hubes in einem Punkt zusammenlaufen, d. h. wenn der volle Druck in der Druckkammer 8 ausgesteuert ist. Wird der Zweikreis-Druckgeber darüber hinaus betätigt, tritt die bekannte mechanische Durchsteuerung ein, die auch immer dann stattfindet, wenn ein Kreis ausfällt bzw. sich ein Defekt in einem der Kreise zeigt. Dann wird aus Sicherheitsgründen der volle Druck an der Vorderachse ausgesteuert.

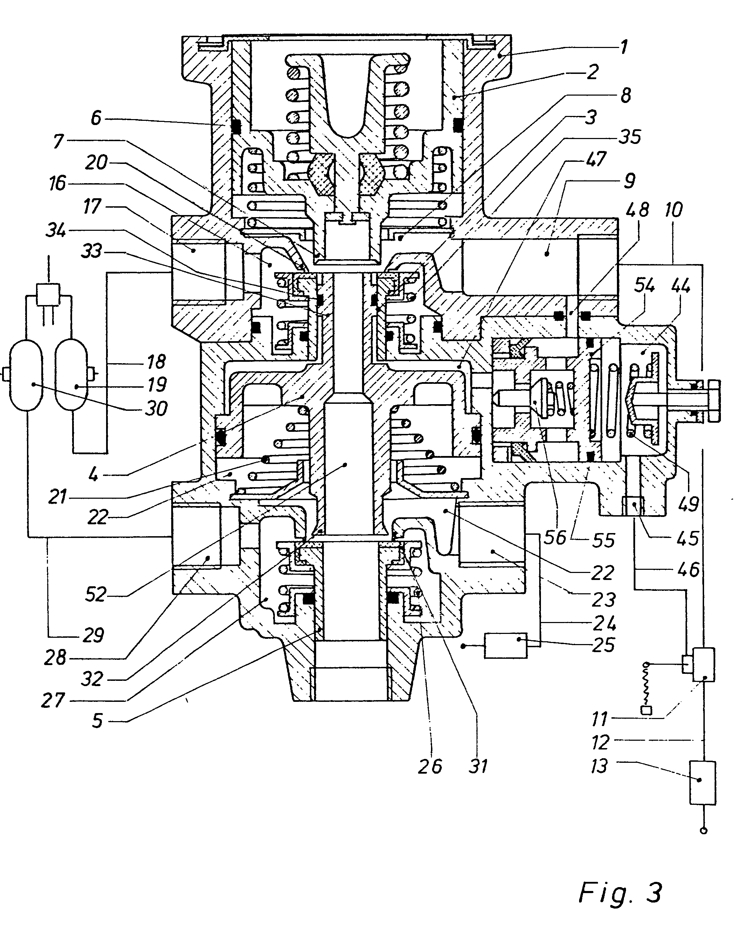

Bei der Ausführungsform gemäß Fig. 3 ist die Integration nicht so weit getrieben wie bei den Ausführungsformen gemäß Fig. 1 und 2. Diese Ausbildung eignet sich daher in besonderer Weise für die Umrüstung bzw. Mitverwendung üblicher Zweikreis-Druckgeber mit zwei einfachen Kolben. Die Ausbildung ist im wesentlichen zunächst analog derjenigen der Fig. 1 und 2. Lediglich das Drucksteuerventil 54 und 56 ist hier seitlich angeflanscht vorgesehen und in den Kanal 48 zu der Steuerkammer 47 eingeschaltet. Es ist ein Steuerkolben 54 vorgesehen, der eine Dichtung 55 aufweist und ansonsten hohl ausgebildet ist, so daß er das gesteuerte Rückschlagventil 56 aufnimmt, welches den Durchgang zu der Steuerkammer 47 kontrolliert. Die Steuerkammer 44 ist über den Anschluß 45 und die Leitung 46 von dem ausgesteuerten Druck des Bremsdruckreglers 11 beaufschlagt, der hier als durchsteuernde Bauart verwirklicht sein möge. In der Steuerkammer 44 ist die Feder 49 angeordnet, die hier sehr leicht einstellbar, wie dargestellt, gemacht werden kann.

Auf diese Art und Weise ist hier das Drucksteuerventil 54 und 56 gebildet. Die Funktion der Ausführungsform gemäß Fig. 3 ist wie anhand der Fig. 1 und 2 gezeigt. Selbstverständlich kann die Feder 49 auch hier auf der anderen Seite des Steuerkolbens 54 angeordnet werden. Das Drucksteuerventil 54 und 56 ist auch hier als Durchgangsregler ausgebildet, d. h. der ausgesteuerte Druck des ersten Kreises wird über das geöffnete Rückschlagventil sofort in die Steuerkammer 47 geleitet, so daß der Kolben 4 unmittelbar nachfolgend betätigt wird. Die hierdurch verursachte Kraft belastet den Steuerkolben 54 auf der durch die Dichtung 55 eingeschlossenen Wirkfläche in der einen Richtung gegen die Kraft der Feder 49. Der ausgesteuerte Bremsdruck des Bremsdruckreglers 11 wirkt nachfolgend mit der Kraft der Feder 49 zusammen entgegen dem eingesteuerten bzw. durchgesteuerten Druck.

**Ansprüche**

1. Zweikreis-Druckgeber für eine druckmittelbetätigbare Zweikreis-Bremsanlage für Fahrzeuge, insbesondere für Kraftfahrzeuge, der einen durch ein Betätigungsglied betätigbaren, die Druckhöhe in einer ersten Druckkammer (8) steuernden ersten Kolben (2) und einen die Druckhöhe in einer zweiten Druckkammer (22) steuernden, in Betätigungsrichtung vom Druck der ersten Druckkammer (8) in einer Steuerkammer (47) beaufschlagten zweiten Kolben (4) enthält, wobei die erste Druckkammer (8) über einen lastabhängig arbeitenden Bremsdruckregler (11) mit den Radbremszylindern (13) der Hinterachse und die zweite Druckkammer (22) mit den Radbremszylindern (25) der Vorderachse verbindbar ist und der Druck in der zweiten Druckkammer (22) mittels des von dem lastabhängig arbeitenden Bremsdruckregler (11) ausgesteuerten Druck im Sinne einer Druckreduzierung modulierbar ist, dadurch gekennzeichnet, daß in dem Strömungsmittelweg zwischen der ersten Druckkammer (8) und der Steuerkammer (47), an die der zweite Kolben (4) mit seiner Gesamtwirkfläche angrenzt, ein Drucksteuerventil (36 und 39 bzw. 54 und 56) vorgesehen ist, das einen als selbständig bewegbares Teil ausgebildeten Kolben (39 bzw. 54) mit einer angrenzend an eine Steuerkammer (44) angeordneten Wirkfläche für die Beaufschlagung durch den vom lastabhängig arbeitenden Bremsdruckregler ausgesteuerten Druck aufweist.

2. Zweikreis-Druckgeber nach Anspruch 1, dadurch gekennzeichnet, daß das Drucksteuerventil (36 und 39) koaxial zu den beiden Kolben (2, 4) und zwischen diesen vorgesehen ist.

3. Zweikreis-Druckgeber nach Anspruch 1 und 2, dadurch gekennzeichnet, daß das Drucksteuerventil (36 und 39) einen Stufenkolben (39) mit einem eingezogenen Rand (40) und auf einem Fortsatz (33) des zweiten Kolbens (4) einen dichtend verschiebbar gelagerten Ventilkörper (36) aufweist, der mit dem Rand (40) zusammenwirkt.

4. Zweikreis-Druckgeber nach Anspruch 1 bis 3, dadurch gekennzeichnet, daß der Stufenkolben (39) und der zweite Kolben (4) durch einen gehäuseseitigen Anschlag (50) voneinander getrennt sind.

5. Zweikreis-Druckgeber nach Anspruch 1, dadurch gekennzeichnet, daß das Drucksteuerventil (54, 56) am Gehäuse (1) des Zweikreis-Druckgebers angeflanscht angeordnet ist.

6. Zweikreis-Druckgeber nach Anspruch 5, dadurch gekennzeichnet, daß das Drucksteuerventil (54, 56) einen hohlen Steuerkolben (54) aufweist, in dem ein gesteuertes Rückschlagventil (56) gelagert ist.

7. Zweikreis-Druckgeber nach Anspruch 5 und 6, dadurch gekennzeichnet, daß der Steuerkolben (54) entgegen seiner Betätigungsrichtung vom ausgesteuerten Druck der ersten Druckkammer (8) und entgegengesetzt von dem vom Bremsdruckregler (11) ausgesteuerten geregelten Bremsdruck beaufschlagbar ist.

8. Zweikreis-Druckgeber nach einem oder mehreren der Ansprüche 1 bis 7, dadurch gekennzeichnet, daß der Stufenkolben (39) bzw. der Steuerkolben (54) in Betätigungsrichtung oder entgegengesetzt dazu von einer insbesondere in ihrer Kraft einstellbaren Feder (49 bzw. 51) belastet ist.

## Claims

1. Dual-circuit pressure transducer for a dual-circuit brake system, actuable by pressure medium, for vehicles, especially for motor vehicles, which contains a first piston (2), actuable by means of an actuation member and controlling the pressure head in a first pressure chamber (8) and a second piston (4) controlling the pressure head in a second pressure chamber (22) and subjected in the actuation direction to the pressure of the first pressure chamber (8) in a control chamber (47), the first pressure chamber (8) being connectable, via a brake-pressure controller (11) working as a function of the load, to the wheel-brake cylinders (13) of the rear axle, the second pressure chamber (22) being connectable to the wheel-brake cylinders (25) of the front axle and the pressure in the second pressure chamber (22) being adjustable towards a pressure reduction by means of the pressure selected by the brake-pressure controller (11) working as a function of the load, characterised in that there is in the flow-medium path between the first pressure chamber (8) and the control chamber (47), to which the second piston (4) is adjacent by means of its total effective surface, a pressure control valve (36, 39 and 54, 56) which has a piston (39, 54) designed as an independently movable part and having an effective surface located adjacent to a control chamber (44), for being subjected to the pressure selected by the brake-pressure controller working as a function of the load.

2. Dual-circuit pressure transducer according to Claim 1, characterised in that the pressure control valve (36, 39) is provided coaxially relative to the two pistons (2, 4) and between these.

3. Dual-circuit pressure transducer according to Claims 1 and 2, characterised in that the pressure control valve (36, 39) has a step piston (39) with a drawn-in edge (40) and, on an extension (33) of the second piston (4), a valve body (36) which is mounted displaceably in a sealing manner and which interacts with the edge (40).

4. Dual-circuit pressure transducer according to Claims 1 to 3, characterised in that the step piston (39) and the second piston (4) are separated from one another by a stop (50) located on the housing.

5. Dual-circuit pressure transducer according to Claim 1, characterised in that the pressure control valve (54, 56) is arranged flanged on the housing (1) of the dual-circuit pressure transducer.

6. Dual-circuit pressure transducer according to Claim 5, characterised in that the pressure control valve (54, 56) has a hollow control piston (54) in which a controlled non-return valve (56) is mounted.

7. Dual-circuit pressure transducer according to Claims 5 and 6, characterised in that the control piston (54) can be subjected, counter to its direction of actuation, to the selected pressure of the first pressure chamber (8) and, opposite to this, to the controlled brake pressure selected by the brake-pressure controller (11).

8. Dual-circuit pressure transducer according to one or more of Claims 1 to 7, characterised in that the step piston (39) or the control piston (54) is loaded, in the direction of actuation or opposite to this, by a spring (49, 51) adjustable especially as regards its force.

## Revendications

1. Distributeur à double circuit pour installation de freinage à deux circuits commandés par fluide pour véhicules, en particulier pour véhicules automobiles, qui comprend un premier piston (2) actionnable par un organe d'actionnement et commandant la pression de refoulement dans une première chambre de compression (8) ainsi qu'un deuxième piston (4), commandant la pression de refoulement dans une deuxième chambre de compression (22) et soumis, dans le sens de l'actionnement, à la pression de la première chambre de compression (8) dans une chambre de commande (47), la première chambre de compression (8) pouvant communiquer, par l'intermédiaire d'un régulateur de pression de freinage (11) travaillant proportionnellement à la charge, avec les cylindres de freins de roues (13) de l'essieu arrière et la deuxième chambre de compression (22) pouvant communiquer avec les cylindres de freins de roues (25) de l'essieu avant, cependant que la pression régnant dans la deuxième chambre de compression (22) est modulable dans le sens d'une réduction de pression au moyen de la pression refoulée par le régulateur de pression de freinage (11) qui travaille proportionnellement à la charge, caractérisé en ce que, sur le trajet du fluide entre la première chambre de compression (8) et la chambre de commande (47), qu'avoisine le deuxième piston (4) avec l'ensemble de sa surface active, il est prévu une valve de commande à pression (36 et 39 ; 54 et 56), qui comporte un piston (39 ; 54) qui constitue une pièce mobile d'une manière indépendante et présente une surface active, voisine d'une chambre de commande (44), pour l'actionnement par la pression refoulée par le régulateur de pression de freinage travaillant proportionnellement à la charge.

2. Distributeur à double circuit suivant la revendication 1, caractérisé en ce que la valve de commande à pression (36 et 39) est coaxiale par rapport aux deux pistons (2, 4) et disposée entre eux.

3. Distributeur à double circuit suivant les revendications 1 et 2, caractérisé en ce que la valve de commande à pression (36 et 39) comporte un piston étagé (39) avec un bord (40) en retrait et un corps de soupape (36) mobile de manière étanche sur un prolongement (33) du deuxième piston (4), ce corps de soupape coopérant avec le bord (40).

4. Distributeur à double circuit suivant les revendications 1 à 3, caractérisé en ce que le piston étagé (39) et le deuxième piston (4) sont séparés l'un de l'autre par une butée (50) placée du côté du corps de distributeur.

5. Distributeur à double circuit suivant la revendication 1, caractérisé en ce que la valve de commande à pression (54, 56) est bridée sur le corps (1) du distributeur à double circuit.

6. Distributeur à double circuit suivant la revendication 5, caractérisé en ce que la valve de commande à pression (54, 56) comporte un piston de commande creux (54), dans lequel est logé un clapet anti-retour (56) commandé.

7. Distributeur à double circuit suivant les revendications 5 et 6, caractérisé en ce que le piston de commande (54) peut être attaqué, contre son sens d'actionnement, par la pression refoulée de la première chambre de compression (8) et, de manière opposée, par la pression de freinage régulée, refoulée par le régulateur de pression de freinage (11).

8. Distributeur à double circuit suivant une ou plusieurs des revendications 1 à 7, caractérisé en ce que le piston étagé (39) et/ou le piston de commande (54) est pressé, dans le sens d'actionnement ou de manière opposée à ce sens, par un ressort (49 et/ou 51), réglable en particulier dans sa force.

Fig. 1

Fig. 2

Fig. 4

Fig. 3